(19) Europäisches Patentamt
European Patent Office
Office européen des brevets

(11) EP 0 582 879 B1

(12) EUROPÄISCHE PATENTSCHRIFT

(45) Veröffentlichungstag und Bekanntmachung des Hinweises auf die Patenterteilung:
**05.11.1997 Patentblatt 1997/45**

(51) Int Cl.[6]: **C08G 77/58**, C08G 77/54, C08G 77/48

(21) Anmeldenummer: **93111811.1**

(22) Anmeldetag: **23.07.1993**

(54) **Geformte Organosiloxan-Polykondensate, Verfahren zu ihrer Herstellung und Verwendung**

Formed organosiloxane polycondensates, process for their preparation and use

Polycondensats d'organosiloxane granulaire, leur préparation et emploi

(84) Benannte Vertragsstaaten:
**AT BE CH DE DK ES FR GB IE IT LI NL PT SE**

(30) Priorität: **06.08.1992 DE 4225978**

(43) Veröffentlichungstag der Anmeldung:
**16.02.1994 Patentblatt 1994/07**

(73) Patentinhaber: **DEGUSSA AG**
**60311 Frankfurt (DE)**

(72) Erfinder:
- **Wieland, Stefan, Dr.**
  **D-63069 Offenbach/Main (DE)**
- **Panster, Peter, dr.**
  **D-63517 Rodenbach (DE)**
- **Grethe, Horst**
  **D-63457 Hanau (DE)**

(56) Entgegenhaltungen:
**EP-A- 0 072 435** **EP-A- 0 098 947**
**EP-A- 0 327 795** **EP-A- 0 367 104**
**EP-A- 0 484 755** **EP-A- 0 507 132**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 582 879 B1

## Beschreibung

Gegenstand der Erfindung sind geformte organofunktionelle Polysiloxane mit einer oder mehreren funktionellen oder nicht funktionellen Siloxaneinheiten, die die anwendungstechnischen und verfahrenstechnischen Vorteile einer makroskopischen Kugelform haben und im Unterschied zu bereits beschriebenen Organosiloxanamin-Copolykondensaten (DE 39 25 359, DE 39 25 360, P 38 37 416, P 38 37 418) keine Komponente des Typs $NR_3$ (mit $R = R'\text{-}SiO_{3/2}$) enthalten.

Es werden Verfahren zur Herstellung der neuen Produkte in einer für die jeweilige Anwendung idealen Korngröße und mit den jeweils geeigneten physikalischen Eigenschaften und Anwendungen für diese neuartigen Materialien beschrieben.

Bekannt sind zum einen ungeformte, durch Fällung mit Base wie z. B. Ammoniak erhältliche, polymere Organosiloxanpulver oder Organosiloxangele, die nach Aushärtung mechanisch zerkleinert werden und als stückige Materialien vorliegen.

Der Einsatz entsprechender Polysiloxane z. B. in gerührten Reaktoren ist mit einem beträchtlichen Anfall von Abrieb und dementsprechenden technischen Problemen verbunden. Die Zugänglichkelt der organischen Funktionen auf und in dem Polysiloxangerüst ist durch ungünstige oder fehlende Porosität nur schlecht möglich.

Ebenfalls bekannt sind kugelförmige Organosiloxane oder Kieselgele, jedoch mit Partikelgrößen im Bereich von wenigen Mikrometern. (T. Kawaguchi, K. Ono; J. Non-Cryst. Solids 1990, 121, 383 - 388, P. Espinard, J.E. Mark, A. Guyot; Polym. Bull. (Berlin) 1990, 24, 173 - 179, Jap. Kokai Tokkyo Koho / 02225328 A 2.

Die hierbei zugrundeliegenden Herstellverfahren basieren auf einer Fällung der Siloxane. Aus prinzipiellen Verfahrensbeschränkungen heraus können hiermit keine größeren kugelförmigen Partikel erzeugt werden; standardmäßig liegt die erreichte Partikelgröße im Bereich von 1 bis maximal 10 Mikrometern.

Bekannt (jedoch nicht vorveröffentlicht) sind Verfahren zur Herstellung von metallhaltigen Organosiloxanamin-Copolykondensaten in Form kugelförmiger Partikel mit einem Durchmesser von 0,01 bis 3,0 mm (DE-PS 41 10 705). Bei diesen Produkten erfüllt das Organosilanamin die Aufgabe als später stabilisierende Siloxankomponente, wie auch als Katalysator für die Hydrolyse- und Polykondensationsreaktion.

Gegenstand der Erfindung sind geformte Organosiloxan-Polykondensate, bestehend aus Einheiten der Formel

$$X - R^1 \qquad (I)$$

und/oder der Formel

$$R^2 - Y - R^3 \qquad (II)$$

und der Formel

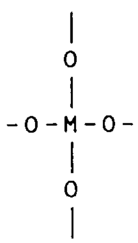 bzw. 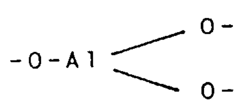 (III)

sowie gegebenenfalls zusätzlich aus Einheiten der Formel

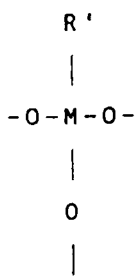 oder 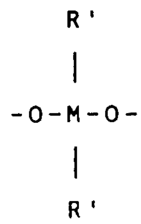 bzw. 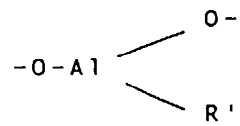 (IV)

in den Verhältnissen von

(I) zu (III) im Bereich von 95 zu 5 bis 5 zu 95 Mol%, bevorzugt von 50 zu 50 bis 10 zu 90 Mol%,
oder
(II) zu (III) oder der Summe aus (I) plus (II) zu (III) von 100 zu 0 bis 5 zu 95 Mol%, bevorzugt von 90 zu 10 bis 10 zu 90 Mol%,
und

im Verhältnis der Summe von (I), (II) und (III) zu (IV) von 100 zu 0 bis 50 zu 50 Mol%, wobei $R^1$ bis $R^3$ gleich oder verschieden sind und eine Gruppe der allgemeinen Formel

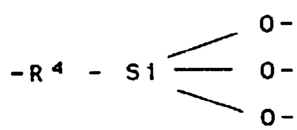 (V)

bedeuten, $R^4$ direkt an den Rest X oder Y gebunden ist und eine lineare oder verzweigte, vollständig gesättigte oder ungesättigte Alkylengruppe mit 1 bis 10 C-Atomen, eine Cycloalkylengruppe mit 5 bis 8 C-Atomen, eine Phenylengruppe oder eine Einheit der allgemeinen Formel

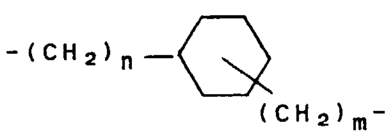 oder 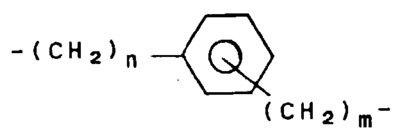

darstellt, in der n eine Zahl von 1 bis 6 ist und die Zahl X bzw. Y-ständiger Methylengruppen angibt und m eine Zahl von 0 bis 6 ist, wobei M ein Si-, Ti- oder Zr-Atom und R' eine lineare oder verzweigte Alkylgruppe mit 1 bis 5 C-Atomen oder eine Phenylgruppe ist und X in Formel (I) für
-H, -Cl, -Br, -J, -CN, -SCN, $-N_3$, -OR", -SH, -COOH, $-P(C_6H_5)_2$, $-NH_2$, $-N(CH_3)_2$, $-N(C_2H_5)_2$, $-NH-(CH_2)_2-NH_2$, $-NH-(CH_2)_2-NH-(CH_2)_2-NH_2$, $-NH-C(S)-NR''_2$, $-NH-C(O)-NR''_2$, $-NR''-C(S)-NR''_2$, $-O-C(O)-C(CH_3)=CH_2$, $-CH=CH_2$, $-CH_2-CH=CH_2$, $-CH_2-CH_2-CH=CH_2$,

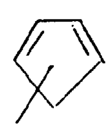

und Y in Formel (II) für
$-S-$, $-S_2-$, $-S_3-$, $-S_4-$, $>P-(C_6H_5)$; $-NH-C(S)-NH-$, $>N-C(S)-NR''_2$,

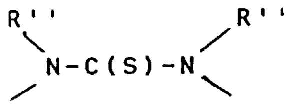 ,

$-NH-C(O)-NH-$, $>N-C(O)-NR''_2$

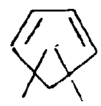

steht, wobei R" gleich H oder eine lineare oder verzweigte Alkylgruppe mit 1 bis 5 C-Atomen ist, in Gestalt kugelförmiger Teilchen mit einem Durchmesser von 0,01 bis 2,5 mm, bevorzugt 0,05 bis 1,5 mm, einer spezifischen Oberfläche von 0,01 bis 1000 $m^2$/g, insbesondere 50 bis 800 $m^2$/g, einem spezifischen Porenvolumen von 0,01 bis 5,0 ml/g sowie eine Schüttdichte von 90 bis 1000 g/l, insbesondere 100 bis 800 g/l Innerhalb der beanspruchten Bereiche werden feste, geformte und wohldefinierte Produkte erhalten; es treten weder Probleme mit den morphologischen, physikalischen, d. h. die Porosität betreffenden Eigenschaften noch im Hinblick auf die chemische Stabilität auf.

In einer besonderen Ausführungsform liegen die Polykondensate als statistische Polykondensate, Block-Polykondensate oder gemischte Polykondensate vor. Bevorzugt nehmen $R^1$, $R^2$ und $R^3$ die Bedeutung

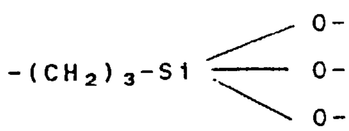

an.

Die geeignete chemische Zusammensetzung der erfindungsgemäßen Polykondensate hängt in erster Linie von ihrer vorgesehenen Verwendung ab. Von der gewünschten Anwendung abhängig, wählt man eine geeignete Funktionalitätsdichte durch Variation des Anteils an Komponenten der Formeln (I) und (II) sowie Komponenten nach Formel (III) und (IV), die der Vernetzung der Polysiloxanmatrix und daneben der Erzielung geeigneter physikalischer Eigenschaften dienen, ohne die durch die eingebauten organofunktionellen Gruppen beabsichtigte Wirkungsweise zu beeinträchtigen.

Als monomere Bausteine für die geformten Organosiloxan-Polykondensate werden z. B. die prinzipiell bekannten Verbindungen

$$Cl-CH_2CH_2CH_2Si(OC_2H_5)_3$$

$$NCS-CH_2CH_2CH_2Si(OC_2H_5)_3$$

$$NC-CH_2CH_2CH_2Si(OCH_3)_3$$

$$CH_2=CHSi(OCH_3)_3$$

$$C_6H_5Si(OC_2H_5)_3$$

$$S[CH_2CH_2CH_2Si(OCH_3)_3]_2$$

$$HN[(CH_2)_{10}Si(OC_2H_5)_3]_2$$

$$Si(OC_2H_5)_4$$

$$Ti(OC_3H_7)_4$$

$$(H_5C_2O)_2Si(CH_3)_2$$

erfolgreich eingesetzt. Wie auch aus den Beispielen zu ersehen ist, kann die Korngrößenverteilung, die spezifische Oberfläche, die Schüttdichte und damit auch die Porosität innerhalb weiter Grenzen gezielt eingestellt werden. Die Ansprüche 3 bis 5 bezeichnen bevorzugte Bereiche.

Im allgemeinen werden statistische Polykondensate erzielt, es ist natürlich möglich, durch gezielte Vorkondensation auch Blockpolykondensate zu erhalten, wie in Anspruch 6 formuliert.

Aus technischen Gründen und wegen der leichten Verfügbarkeit entsprechender Ausgangssilane ist eine $C_3$-Spacer-Gruppierung zwischen dem Siliziumatom und der organischen Funktionalität bevorzugt.

Gegenstand der Erfindung sind auch die in den Ansprüchen 8 bis 14 genannten Verfahren zur Herstellung der erfindungsgemäßen Polykondensate. Ein Verfahren zur Herstellung statistischer Polykondensate in Kugelform ist in Anspruch 8 gegeben.

Prinzipiell können als Ausgangsstoffe für das Verfahren anstelle der Alkoxysilylverbindungen auch die entsprechenden Halogenid- oder Phenoxyverbindungen eingesetzt werden, doch bietet deren Verwendung keine Vorteile, sondern kann z. B. im Fall der Chloride, Schwierigkeiten durch die bei der Hydrolyse freiwerdende Salzsäure verursachen.

Die Hydrolyse von Ausgangsstoff und gegebenenfalls Vernetzer muß in einem weitgehend wassermischbaren, aber die Ausgangsstoffe lösenden Lösungsmittel durchgeführt werden. Bevorzugt werden dabei Alkohole verwendet, die zu den Alkoxygruppierungen an den monomeren Vorstufen der Ausgangsstoffe bzw. an den Metallatomen der gegebenenfalls eingesetzten Vernetzer korrespondieren. Besonders geeignet ist Methanol, Ethanol, n- und i-Propanol, n- und i-Butanol oder n-Pentanol. Auch Gemische solcher Alkohole können als Lösungsmittel bei der Hydrolyse angewandt werden. Anstelle von Alkoholen können auch andere polare Lösungsmittel, die weitgehend wassermischbar sind, eingesetzt werden, doch erweist sich dies aus verfahrenstechnischen Gründen wegen der mit dem hydrolytisch abgespaltenen Alkohol zustandekommenden Lösungsmittelgemische als wenig sinnvoll.

Bevorzugt führt man die Hydrolyse mit einem Überschuß an Wasser über die stöchiometrisch erforderliche Menge durch. Die zur Hydrolyse benötigte Menge Wasser hängt von der Hydrolysegeschwindigkeit des jeweils verwendeten Organosilans bzw. des Vernetzers derart ab, daß mit zunehmender Menge Wasser raschere Hydrolyse erfolgt; allerdings kann eine Obergrenze durch auftretende Entmischung und Ausbildung eines Zweiphasensystems vorgegeben sein. Grundsätzlich ist eine Hydrolyse in homogener Lösung vorzuziehen.

Aufgrund der genannten beiden Aspekte wird in praxi gewichtsmäßig etwas weniger Wasser verwendet als Organosilane zuzüglich Vernetzer.

Die Dauer der Hydrolyse hängt von der Hydrolyseneigung von Ausgangsstoff und/oder Vernetzer und von der Temperatur ab. Die Hydrolysebereitschaft und damit -geschwindigkeit hängt insbesondere von der Art der Silicium- bzw. Titan-, Zirkonium-, Aluminium-ständigen Alkoxygruppen ab, wobei die Methoxygruppe am schnellsten hydrolysiert und mit steigender Kettenlänge des Kohlenwasserstoffrests eine Verlangsamung eintritt. Daneben hängt die Dauer des Gesamtvorganges Hydrolyse und Polykondensation auch von der Basizität des Organosilans ab. Hydrolyse und Polykondensation können durch Zusatz von Basen, vorzugsweise von Ammoniak, oder von anorganischen oder organischen Säuren, aber auch von üblichen Kondensationskatalysatoren, wie Dibutylzinndiacetat, beschleunigt werden.

Als Katalysatoren kommen grundsätzlich auch alle Broenstedt Säuren und Basen in Betracht. Große technische Schwierigkeiten bereitete die Reaktionsführung und die Auswahl und Konzentration des Katalysators, um ein Ausfällen der Siloxane zu verhindern. Überraschend war, daß es gelang, kugelförmige Produkte herzustellen, zumal die Säure- bzw. Basen-katalysierte Hydrolyse von Organosilanen bekannt und vielfältig zur Herstellung von ungeformten und von der Physik her undefinierten Polysiloxanen genutzt wird.

Das Erfordernis, den in Lösungsmittel gelösten und mit Wasser vernetzten Ausgangsstoff unter Weiterrühren auf einer bestimmten Temperatur zu halten, resultiert daher, daß die Geschwindigkeit der sich durch Gelierung anzeigenden Polykondensation temperaturabhängig ist.

Die in der Hydrolyse bzw. Gellerphase anzuwendende Temperatur wird im Einzelfall empirisch festgelegt. Es wird dabei darauf geachtet, daß für den darauffolgenden nächsten Verfahrensschritt die sog. Formungsphase, eine Feststoff-freie, flüssigkeitsdurchsetzte geleeartige Masse erhalten bleibt.

Die mit der Überführung der kohärenten flüssigkeitsdurchsetzten gelartigen Masse (in der die Kondensationsreaktion weiter fortschreitet) in separate sphärische Teilchen einhergehende Formungsphase beginnt mit dem Versetzen der (an)gelierten Reaktionsmischung mit einem weitgehend wasserunlöslichen, aber die Reaktionsmischung ausreichend lösenden Lösungsmittel in der vorgesehenen Menge.

Geeignete Lösungsmittel sind z. B. lineare oder verzweigte Alkohole mit 4 bis 18 C-Atomen oder Phenole, lineare oder verzweigte symmetrische oder unsymmetrische Dialkylether sowie Di- oder Triether (wie Ethylenglycoldimethylether), chlorierte oder fluorierte Kohlenwasserstoffe, mit einer oder mehreren Alkylgruppen substituierten Aromaten oder Aromatengemische, wie z. B. Toluol oder Xylol, weitgehend mit Wasser nicht mischbare symmetrische und unsymmetrische Ketone.

Bevorzugt wird der (an)gelierten Reaktionsmischung jedoch ein linearer oder verzweigter Alkohol mit 4 bis 12 C-Atomen, Toluol oder o-, m-, p-Xylol, einzeln oder im Gemisch, zugesetzt.

Dieser Lösungsmittelzusatz bewirkt nach der Homogenisierung mit der Reaktionsmischung eine Verdünnung und damit eine deutliche Verlangsamung der mit Viskositätszunahme einhergehenden Kondensationsreaktion.

Die Bemessung der Menge dieses in der Formungsphase verwendeten Lösungsmittels hängt insbesondere davon ab, welche Korngröße jeweils für die geformte Organosiloxanverbindung angestrebt wird. Als Faustregel kann gelten, daß für grobes Korn (Kugeln von größerem Durchmesser) wenig, für feines Korn (Kugeln von kleinerem Durchmesser) viel Lösungsmittel zu verwenden ist.

Einfluß auf die Korngröße nimmt darüber hinaus auch die Intensität, mit der das viskose Homogenisat aus Reaktionsmischung und weitgehend wasserunlöslichem Lösungsmittel in dem in der Formungsphase als Dispersionsmittel zugesetzten weiteren Wasser dispergiert wird. Durch starkes Rühren wird regelmäßig die Ausbildung eines feineren Korns begünstigt. Zur Stabilisierung der wäßrigen Dispersion der (jetzt Siloxan enthaltenden) organischen Phase kann eines der bekannten Dispergierhilfsmittel, wie langkettige Carbonsäuren oder deren Salze oder Polyalkylenglycole in üblichen Konzentrationen verwendet werden.

Nach einer Variante des erfindungsgemäßen Verfahrens wird ein Teil oder auch die Gesamtmenge des bei oder nach Gelierungsbeginn zuzusetzenden, weitgehend wasserunlöslichen Lösungsmittels schon in der Hydrolysestufe neben dem dort verwendeten Lösungsmittel eingesetzt. Bei Teilzugabe wird der Rest nach Gelierungsbeginn zugesetzt.

Im Extremfall der Zugabe der Gesamtmenge kann das Dispersionsmittel Wasser bei oder nach Gelierungsbeginn zugesetzt werden. Diese Variante wird dann bevorzugt angewendet, wenn das eingesetzte Organosilan- und gegebenenfalls Vernetzergemisch außerordentlich hohe Hydrolyse- und Polykondensationsneigung zeigt.

Die bevorzugte Temperatur, bei der die Dispergierung der Siloxan-enthaltenden organischen Phase in der wäßrigen Phase durchgeführt und aus der dispersen Phase kugelförmiger Feststoff gebildet wird, ist in der Regel die Rückflußtemperatur der Gesamtmischung. Grundsätzlich können aber dieselben Temperaturen wie in der Gelierstufe angewandt werden. Die Gesamtdauer von Dispergierungsstufe und Nachreaktion beträgt in der Regel 0,5 bis 10 Stunden.

Sowohl die Gelierung als auch die Formung können bei Normaldruck oder einem Überdruck, welcher der Summe der Partialdrucke der Komponenten der Reaktionsmischung bei der jeweils angewandten Temperatur entspricht, durchgeführt werden.

Bei der Herstellung der erfindungsgemäß geformten vernetzten oder unvernetzten Organosiloxane kann, was auch abhängig von der Art der Alkoxygruppen ist, der Fall eintreten, daß eine oder mehrere Komponenten der zu gelierenden Mischung ein unterschiedliches Hydrolyse- und Polykondensationsverhalten besitzt. In diesem Fall sieht eine Ausgestaltung des erfindungsgemäßen Verfahrens vor, den oder die Vernetzer und/oder das organofunktionelle Silan nicht gemeinsam der Gelierung zu unterwerfen, sondern sie zunächst separat zu gelieren, mit dem weitgehend wasserunlöslichen Lösungsmittel zu homogenisieren und erst dann den oder die Vernetzer oder das Organosilan dem Homogenisat zuzusetzen.

Es können aber auch dem gelierten Ansatz gleichzeitig das Lösungsmittel und die noch fehlende Silankomponente zugegeben werden.

Die Abtrennung des kugelig geformten feuchten Produkts von dem flüssigen Dispersionsmittel kann durch übliche Maßnahmen, wie Dekantieren, Abfiltrieren oder Zentrifugieren erfolgen.

Man kann dazu aber auch die flüssige Phase aus dem Reaktor entfernen, den verbleibenden Feststoff darin ein- oder mehrmals mit einem niedrigsiedenden Extraktionsmittel, bevorzugt in einem niedrigsiedenden Alkohol, behandeln, um durch zumindest teilweisen Austausch des meist relativ hochsiedenden Lösungsmittels der Formungsphase gegen das niedrigsiedende Extraktionsmittel die spätere Trocknung des geformten Materials zu erleichtern.

Die Trocknung kann grundsätzlich bei Raumtemperatur bis 250° C, gegebenenfalls unter Schutzgas oder im Vakuum, durchgeführt werden. Zur Härtung und Stabilisierung kann der getrocknete geformte Feststoff bei Temperaturen von 150 bis 300° C getempert werden.

Das getrocknete bzw. getemperte Produkt kann in üblichen Vorrichtungen in verschiedene Korngrößenfraktionen klassiert werden. Von den Aufarbeitungsmaßnahmen Extraktion, Trocknung, Temperung und Klassierung kann, je

nach den Umständen, die eine oder andere entfallen. Eine Klassierung kann an flüssigkeitsfeuchtem, getrocknetem oder getempertem Produkt durchgeführt werden.

Um ein unterschiedliches Hydrolyse- und Polykondensationsverhalten der monomeren Komponenten eines statischen, gegebenenfalls vernetzten Copolykandensates auszugleichen, können die monomeren Komponenten nach Formel (V) und (VIII) zunächst vorkondensiert werden.

Eine besonders wichtige Ausführungsform der erfindungsgemäßen Verfahren sieht vor, das noch lösungsmittel- und wasserfeuchte bzw. -nasse kugelförmige Material einer Temperaturbehandlung während 1 Stunde bis zu einer Woche bei Temperaturen von 50 - 300° C, vorzugsweise 100 - 200° C zu unterwerfen, wobei bedarfsweise Überdruck angewendet wird.

Diese Behandlung unter "dämpfenden" bzw. digerierenden Bedingungen dient ebenfalls überwiegend einer Verbesserung der mechanischen Festigkeit und der Porosität des geformten Materials und kann auch in der zuletzt vorliegenden, eine flüssige und die feste Produktphase enthaltenden Dispersion des Herstellungsganges oder in Wasser allein durchgeführt werden.

Die vorstehend beschriebene Ausführungsform einer Nachbehandlung der erhaltenen, aber nicht getrockneten geformten Organosiloxan-Copolykondensate besteht also darin, den in Form von Kugeln ausgebildeten Feststoff in Anwesenheit mindestens der Komponente Wasser bzw. der im Herstellungsgang zuletzt vorliegenden flüssigen Phase als Dampf oder Flüssigkeit, einer Temperaturbehandlung während 1 Stunde bis zu einer Woche bei Temperaturen von 50 - 300° C, vorzugsweise 100 - 200° C, gegebenenfalls unter Überdruck, zu unterwerfen. Dabei kann die Anwesenheit eines sauren, basischen oder metallhaltigen Katalysators von Vorteil sein. Eine besonders vorteilhafte Ausführungsform sieht die Verwendung von Ammoniak vor.

Charakterisiert sind die neuen geformten Organosiloxan-Copolykondensate insbesondere anhand der quantitativen Hydrolyseausbeuten, der Elementaranalysen und durch die Bestimmung der einzelnen Funktionalitäten.

Zwischen den nach den unterschiedlichen Herstellungsverfahren erhaltenen Copolykondensaten besteht rein optisch kein Unterschied. Je nach Vorbehandlung besitzen die kugelig geformten erfindungsgemäßen Copolykondensate einen Teilchendurchmesser von 0,01 bis 2,5, vorzugsweise 0,05 bis 1,5 mm, eine spezifische Oberfläche von 0,01 bis 1000, vorzugsweise 150 bis 800 $m^2/g$, ein spezifisches Porenvolumen von 0,01 bis 5,0 ml/g und eine Schüttdichte von 50 bis 1000 g/l, vorzugsweise 100 bis 800 g/l. Die einstellbaren Porendurchmesser liegen im Bereich von 0,01 bis über 1000 nm.

Die gezielte Steuerung der Synthese erlaubt die Herstellung von Produkten in der anwendungstechnisch günstigen Kugelform und mit den gewünschten physikalischen und morphologischen Eigenschaften.

Die kugelförmigen Polykondensate können, gegebenenfalls nach weiterer nachträglicher chemischer Modifizierung als Wirkstoffträger im allgemeinen oder auch als Träger zur Herstellung von Edelmetallkatalysatoren verwendet werden.

Eine weitere Verwendbarkeit aller erfindungsgemäßen Copolykondensate ist der Einsatz zur adsorptiven Bindung von gasförmigen organischen Verbindungen und/oder von Wasserdampf, vorzugsweise von organischen Lösungsmitteln.

Entscheidend für diese Tätigkeit zur Adsorption sind vor allem das spezifische Porenvolumen, der Porendurchmesser und die Oberflächeneigenschaften.

Diese Faktoren können einerseits über die erfindungsgemäßen Herstellungs- und Nachbehandlungsverfahren sowie andererseits auch über die chemische Zusammensetzung, z. B. durch den Einbau hydrophobierend wirkender Vernetzergruppen in das Polysiloxangerüst, beeinflußt werden. Die Rückgewinnung der adsorbierten organischen Verbindungen oder des Wassers ist durch Temperaturerhöhung und/oder durch Begasen mit erwärmter Luft ohne weiteres möglich.

Die Erfindung wird nachfolgend anhand von Ausführungsbeispielen weiter erläutert.

## Beispiel 1

383,8 g $Si(OC_2H_5)_4$ zusammen mit 500 ml Ethanol und 100 ml l-Octanol in einem 3 l Doppelmantel-Glasgefäß vorgelegt und unter Rühren auf 80° C erwärmt. 125 ml Wasser (pH = 4,0) chargiert, den Ansatz auf 60° C abgekühlt und 0,1 ml Tributylamin zugesetzt. Den Ansatz unter langsamen Rühren bei 60° C Innentemperatur gehalten. Nach 20 Minuten geliert der Ansatz, d. h. die Viskosität steigt merkbar an. Die Rührung wird sofort erhöht (600 U/min) und es werden 116,2 g $NC\text{-}CH_2CH_2CH_2\text{-}Si(OCH_3)_3$, gelöst in 400 ml Octanol, zugesetzt. Zu der homogenen Lösung werden nach 10 Min. 1500 ml Wasser (50° C) zugesetzt und die organische Lösung im Wasser dispergiert. Die vorliegende Emulsion wird erhitzt und 2 Stunden unter Rückfluß gekocht. Nach Abkühlen des Ansatzes wird der entstandene Feststoff abgesaugt und dreimal mit Ethanol extrahiert. Das Produkt wird 24 h unter $N_2$ bei 150° C getrocknet. Nach Klassierung des Feststoffes werden 177 g (95,9 % d. Theorie) Produkt, in Form eines Feststoffes mit kugelförmigen Partikeln im Korngrößenbereich von 0,1 bis 0,6 mm (davon 65 % im Bereich von 0,2 bis 0,4 mm) und der Zusammensetzung $NC\text{-}(CH_2)_3\text{-}SiO_{3/2} \cdot 3\ SiO_2$ erhalten.

| Elementaranalyse | % C | % H | % N | % Si |
|---|---|---|---|---|
| Theorie | 15,9 | 2,0 | 4,6 | 37,4 |
| Gefunden | 14 | 2,3 | 3,2 | 35,7 |
| Schüttdichte | 683 g/l (wasserfrei) | | | |

Beispiel 2

Das analog zu Beispiel 1 hergestellte Produkt wird nach der Extraktion mit Ethanol zunächst einer hydrothermalen Behandlung bei 150° C in 5 % wäßriger Ammoniaklösung (24 h) unterzogen und dann wie in Beispiel 1 getrocknet. Erhalten wird ein Feststoff wie in Beispiel 1, jedoch mit einer Schüttdichte von 405 g/l.

Beispiel 3

138,8 g $S[CH_2CH_2CH_2Si(OCH_3)_3]_2$ und 161,2 g $Si(OC_2H_5)_4$ zusammen mit 300 ml Ethanol und 120 ml 1-Octanol in einem 3 l Doppelmantel-Glasgefäß vorgelegt und unter Rühren auf 75° C erwärmt. 49 g $NH_3$-Lösung (25 Gew.-% in Wasser) und 55 ml destilliertes Wasser chargiert, den Ansatz auf 70° C abgekühlt. Nach 5 Minuten geliert der Ansatz, die Rührung wird sofort erhöht (600 U/min) und es werden 240 ml Octanol zugesetzt. Zu der homogenen Lösung werden sofort 900 ml Wasser (50° C) zugesetzt und die organische Phase im Wasser dispergiert. Die vorliegende Emulsion wird erhitzt und 2 Stunden unter Rückfluß gekocht. Der Ansatz wird abgesaugt, der isolierte Feststoff wird mit 5 %iger $NH_3$-Lösung versetzt und im Laborautoklaven 24 h bei 150° C gerührt. Nach Abkühlen des Ansatzes wird der entstandene Feststoff abgesaugt und dreimal unter Rühren mit Ethanol extrahiert.

Das Produkt wird unter $N_2$ 4 h bei 60° C, 4 h bei 90°C, 4 h bei 120° C und anschließend 12 h bei 150°C getrocknet. Nach Klassierung des Feststoffes werden 101 g Produkt in Form eines Feststoffes mit kugelförmigen Partikeln im Korngrößenbereich von 0,3 bis 0,8 mm und der Zusammensetzung $S[(CH_2)_3\text{-}SiO_{3/2} \cdot 2\ SiO_2$ erhalten.

| Elementaranalyse | % C | % H | % S | % Si |
|---|---|---|---|---|
| Theorie | 21,2 | 3,6 | 9,4 | 32,9 |
| Gefunden | 23 | 4,1 | 9,9 | 30,7 |
| Schüttdichte | 164 g/l (wasserfrei) | | | |

Beispiel 4

62,4 g $CH_3CH_2CH_2Si(OCH_3)_3$ und 237,6 g $Si(OC_2H_5)_4$ zusammen mit 300 ml Ethanol in einem 3 l Doppelmantel-Glasgefäß vorgelegt und unter Rühren auf 80° C erwärmt. 71 g HCl-Lösung (37 Gew.-% in Wasser) und 90 ml destilliertes Wasser stufenweise chargiert, den Ansatz 2 h unter Rückfluß gekocht, dann auf 70° C abgekühlt. Nach 15 Minuten geliert der Ansatz, die Rührung wird sofort erhöht (600 U/min) und nach 1 Minute werden 300 ml Octanol zugesetzt. Zu der homogenen Lösung werden nach erneut 1 Minute 900 ml Wasser (50° C) zugesetzt und die organische Phase im Wasser dispergiert. Die vorliegende Emulsion wird erhitzt und 2 Stunden unter Rückfluß gekocht.

Der Ansatz wird abgesaugt, der isolierte Feststoff wird mit 5 %iger $NH_3$-Lösung versetzt und im Laborautoklaven 24 h bei 150° C gerührt.

Nach Abkühlen des Ansatzes wird der entstandene Feststoff abgesaugt und dreimal unter Rühren mit Ethanol extrahiert.

Das Produkt wird unter $N_2$ 4 h bei 60° C, 4 h bei 90° C, 4 h bei 120° C und anschließend 12 h bei 150° C getrocknet. Nach Klassierung des Feststoffes werden 92 g Produkt, in Form eines Feststoffes mit kugelförmigen Partikeln im Korngrößenbereich von 0,1 bis 0,8 mm und der Zusammensetzung $CH_2CH_2CH_2\text{-}SiO_{3/2} \cdot 3\ SiO_2$ erhalten.

| Elementaranalyse | % C | % H | % Si |
|---|---|---|---|
| Theorie | 13,1 | 2,6 | 40,8 |
| Gefunden | 13,0 | 2,8 | 39,7 |
| Schüttdichte | 240 g/l (wasserfrei) | | |

Beispiel 5

60,6 g NCS-$CH_2CH_2CH_2Si(OC_2H_5)_3$ und 239,5 g $Si(OC_2H_5)_4$ zusammen mit 300 ml Ethanol in einem 3 l Doppelmantel-Glasgefäß vorgelegt und unter Rühren auf 80° C erwärmt. 71 g HCl-Lösung (37 Gew.-% in Wasser) und 45 ml destilliertes Wasser stufenweise chargiert, den Ansatz 40 Minuten unter Rückfluß gekocht, dann auf 70° C abgekühlt. Nach 215 Minuten geliert der Ansatz, die Rührung wird sofort erhöht (600 U/min) und nach 1 Min. werden 300 ml Octanol zugesetzt. Zu der homogenen Lösung werden nach 5 Minuten 900 ml Wasser (50° C) zugesetzt und die organische Phase im Wasser dispergiert. Die vorliegende Emulsion wird erhitzt und 2 Stunden unter Rückfluß gekocht.

Nach Aufarbeitung analog Beispiel 4 wurde ein geformtes Polysiloxan der Zusammensetzung NCS-$CH_2CH_2CH_2$-$SiO_{3/2} \cdot 5\ SiO_2$ erhalten.

Beispiel 6

57,8 g $CH_2$=$CH_2Si(OCH_3)_3$ und 242,2 g $Si(OC_2H_5)_4$ zusammen mit 300 ml Ethanol und 120 ml 1-Octanol in einem 3 l Doppelmantel-Glasgefäß vorgelegt und unter Rühren auf 80° C erwärmt. 75 ml Wasser (pH = 4,0) chargiert, den Ansatz auf 70° C abgekühlt und 2,0 ml Triethylamin zugesetzt. Den Ansatz unter langsamen Rühren bei 60° C Innentemperatur gehalten. Nach 15 Minuten geliert der Ansatz, die Rührung wird sofort erhöht (600 U/min) und es werden 240 ml Octanol zugesetzt. Zu der homogenen Lösung werden sofort 900 ml Wasser (50°C) zugesetzt und die organische Lösung im Wasser dispergiert. Die weitere Aufarbeitung erfolgte wie in Beispiel 1. Es wurde ein geformtes Polysiloxan folgender Zusammensetzung erhalten: $CH_2$=$CH_2$-$SiO_{3/2} \cdot 3\ SiO_2$.

Beispiel 7

81,9 g $C_8H_{17}Si(OCH_3)_3$ und 218,2 g $Si(OC_2H_5)_4$ wurden völlig analog Beispiel 6 umgesetzt und ein geformtes Polysiloxan der Zusammensetzung $C_8H_{17}SiO_{3/2} \cdot 3\ SiO_2$ erhalten.

Beispiel 8

Analog Beispiel 6 wurden 73,1 g Phenyltriethoxysilan und 226,9 g Polydiethylsilikat 40 (vorkondensiertes Tetraethoxysilan, entsprechend 40 % $SiO_2$-Gehalt) umgesetzt und ein Produkt der Zusammensetzung $C_6H_5SiO_{3/2} \cdot 5\ SiO_2$ erhalten.

| | |
|---|---|
| Siebanalyse | 0,2 - 0,3 mm : 31 %<br>0,3 - 0,6 mm : 59 %<br>0,6 - 0,8 mm : 10 % |
| BET-Oberfläche | 642 $m^2/g$ |
| Mesoporen (2-30 nm) | 0,72 ml/g |
| Makroporen | 0,84 ml/g |

Beispiel 9

Analog Beispiel 6 wurden 26,9 g Propyltrimethoxysilan und 273,1 g Tetraethoxysilan umgesetzt und ein Produkt der Zusammensetzung $C_3H_7SiO_{3/2} \cdot 8\ SiO_2$ erhalten.

| | |
|---|---|
| BET-Oberfläche | 784 $m^2/g$ |
| Mesoporen (2-30 nm) | 0,48 ml/g |
| Makroporen | 1,24 ml/g |
| Schüttdichte | 390 g/l |

Beispiel 10

Das nach Beispiel 9 hergestellte Polysiloxan wurde vor der Trocknung 24 h bei 150° C mit 5 % $NH_3$-Lösung gerührt.

| | |
|---|---|
| BET-Oberfläche | 491 $m^2/g$ |

(fortgesetzt)

| | |
|---|---|
| Mesoporen (2-30 nm) | 1,81 ml/g |
| Makroporen | 3,35 ml/g |
| Schüttdichte | 192 g/l |

Beispiel 11

Analog Beispiel 6 wurden 83,44 g Chlor-Propyltriethoxysilan und 216,6 g Tetraethoxysilan umgesetzt und ein geformtes Polysiloxan der Zusammensetzung $Cl\text{-}CH_2CH_2CH_2SiO_{3/2} \cdot 3\ SiO_2$ erhalten.

| | |
|---|---|
| Chlorgehalt | 10,4 Gew.-% (Theorie: 11,4 Gew.-%) |
| Spez. Oberfläche | 649 $m^2/g$ |
| Mikroporen (< 2 nm) | 0,42 ml/g |
| Mesoporen: (2-30 nm) | 0,02 ml/g |
| Makroporen | 0,75 ml/g |
| Schüttdichte | 545 g/l |

Beispiel 12

Analog Beispiel 6, jedoch unter Verwendung von 1 ml Triethylamin wurden 50,9 g $HN[CH_2CH_2CH_2Si(OC_2H_5)_3]_2$ und 249,1 g Tetraethoxysilan umgesetzt und ein geformtes Polysiloxan der Zusammensetzung $HN[CH_2CH_2CH_2SiO_{3/2}]_2 \cdot 10\ SiO_2$ erhalten. Vor der Trocknung wurde das Rohprodukt bei 200° C für 24 h in Wasser gerührt.

| | |
|---|---|
| Spez. Oberfläche | 112 $m^2/g$ |
| Mesoporen (2-30 nm) | 0,22 ml/g |
| Makroporen | 4,47 ml/g |
| Schüttdichte | 167 g/l |

**Patentansprüche**

**1.** Geformte Organoslloxan-Polykondensate,
**dadurch gekennzeichnet,**
daß sie aus Einheiten der Formel

$$X - R^1 \qquad (1)$$

und/oder der Formel

$$R^2 - Y - R^3 \qquad (II)$$

und der Formel

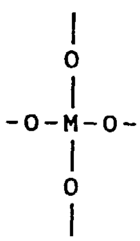 bzw. 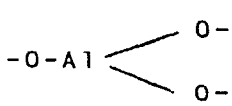 (III)

sowie gegebenenfalls zusätzlich aus Einheiten der Formel

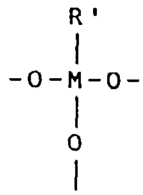 oder 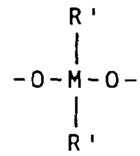 bzw. 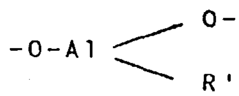 (IV)

in den Verhältnissen von

(I) zu (III) Im Bereich von 95 zu 5 bis 5 zu 95 Mol% oder
(II) zu (III) oder der Summe aus (I) plus (II) zu (III) von 100 zu 0 bis 5 zu 95 Mol%
und
im Verhältnis der Summe von (I), (II) und (III) zu (IV) von 100 zu 0 bis 50 zu 50 Mol%
bestehen, wobei $R^1$ bis $R^3$ gleich oder verschieden sind und eine Gruppe der allgemeinen Formel

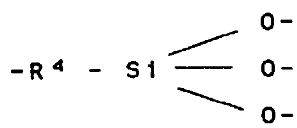 (V)

bedeuten, $R^4$ direkt an den Rest X oder Y gebunden ist und eine lineare oder verzweigte, vollständing gesättigte oder ungesättigte Alkylengruppe mit 1 bis 10 C-Atomen, eine Cycloalkylengruppe mit 5 bis 8 C-Atomen, eine Phenylengruppe oder eine Einheit der allgemeinen Formel

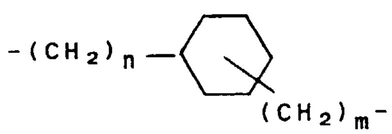 oder 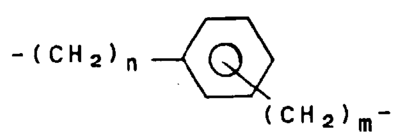

darstellt, in der n eine Zahl von 1 bis 6 ist und die Zahl X bzw. Y-ständiger Methlylengruppen angibt und m eine Zahl von 0 bis 6 ist, wobei M ein Si-, Ti- oder Zr-Atom und R' eine lineare oder verzweigte Alkylgruppe mit 1 bis 5 C-Atomen oder eine Phenylgruppe ist und X in Formel (I) für
-H, -Cl, -Br, -J, -CN, -SCN, $-N_3$, -OR", -SH, -COOH, $-P(C_6H_5)_2$, $-NH_2$, $-N(CH_3)_2$, $-N(C_2H_5)_2$, $-NH-(CH_2)_2-NH_2$, $-NH-(CH_2)_2-NH-(CH_2)_2-NH_2$, $-NH-C(S)-NR''_2$, $-NH-C(O)-NR''_2$, $-NR''-C(S)-NR''_2$, $-O-C(O)-C(CH_3)=CH_2$, $-CH=CH_2$, $-CH_2-CH=CH_2$, $-CH_2-CH_2-CH=CH_2$,

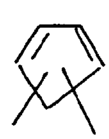

und Y in Formel (II) für
-S-, $-S_2-$, $-S_3-$, $-S_4-$, $>P-(C_6H_5)$; -NH-C(S)-NH-, $>N-C(S)-NR''_2$,

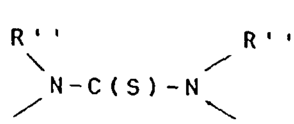 ,

-NH-C(O)-NH-, >N-C(O)-NR$''_2$

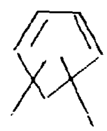

steht, wobei R" gleich H oder eine lineare oder verzweigte Alkylgruppe mit 1 bis 5 C-Atomen ist,
**gekennzeichnet durch**
makroskopisch kugelförmige Teilchen mit einem Durchmesser von 0,01 bis 2,5 mm, einer spezifischen Oberfläche von 0,01 bis 1000 $m^2/g$, einem spezifischen Porenvolumen von 0,01 bis 5,0 ml/g sowie einer Schüttdichte von 50 bis 1000 g/l.

**2.** Geformte Organosiloxan-Polykondensate gemäß Anspruch 1,
**dadurch gekennzeichnet,**

daß die Verhältnisse von (I) zu (III) im Bereich von 50 zu 50 bis 10 zu 90 Mol%
oder
(II) zu (III) oder der Summe aus (I) plus (II) zu (III) von 90 zu 10 bis 10 zu 90 Mol%
und
im Verhältnis der Summe von (I), (II) und (III) zu (IV) von 100 zu 0 bis 50 zu 50 Mol% liegen.

**3.** Geformte Organosiloxan-Polykondensate gemäß den Ansprüchen 1 bis 2,
**dadurch gekennzeichnet,**
daß die Teilchen einen Durchmesser von 0,05 bis 1,5 mm haben.

**4.** Geformte Organosiloxan-Polykondensate gemäß den Ansprüchen 1 bis 3,
**dadurch gekennzeichnet,**
daß sie eine spezifische Oberfläche von 50 bis 800 $m^2/g$ haben.

**5.** Geformte Organosiloxan-Polykondensate gemäß den Ansprüchen 1 bis 4,
**dadurch gekennzeichnet,**
daß sie eine Schüttdichte von 100 bis 800 g/l haben.

**6.** Geformte Organoslloxan-Polykondensate gemäß den Ansprüchen 1 bis 5,
**dadurch gekennzeichnet,**
daß sie als sog. statistische Polykondensate, Block-Polykondensate oder gemischte Polykondensate vorliegen.

**7.** Geformte Organosiloxan-Polykondensate gemäß den Ansprüchen 1 bis 6,
**dadurch gekennzeichnet,**
daß die Reste $R^1$ bis $R^3$ für eine Gruppe der allgemeinen Formel

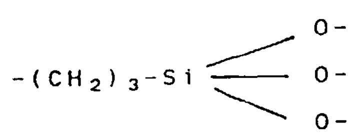

stehen.

**8.** Verfahren zur Herstellung von geformten statistischen Organosiloxan-Polykondensaten gemäß Anspruch 1,
**dadurch gekennzeichnet,**
daß die Silankomponenten der allgemeinen Formeln (VI) bis (VIII)

$$X\text{-}R^5 \qquad (VI)$$

$$R^6\text{-}Y\text{-}R^7 \qquad (VII),$$

$$M(OR^8)_{2\text{-}4}R'_{0\text{-}2} \text{ bzw. } Al(OR^8)_{2\text{-}3}R'_{0\text{-}1} \qquad (VIII)$$

entsprechend der in den Ansprüchen 1 und 2 festgelegten stöchiometrischen Zusammensetzung des herzustellenden Polysiloxanes, wobei $R^5$ bis $R^7$ gleich oder verschieden sind, und jeweils eine Gruppe der allgemeinen Formel (IX)

$$- R^4 - Si(OR^9)_3 \qquad (IX)$$

bedeuten, X, V, R', M und $R^4$ jeweils dieselbe Bedeutung wie in den Formeln (I) bis (V) besitzen und $R^8$ und $R^9$ für eine lineare oder verzweigte Alkylgruppe mit 1 bis 5 C-Atomen stehen, in einem weitgehend wassermischbaren aber die Silankomponenten lösenden Lösungsmittel auflöst, der Lösung unter Rühren eine zumindest für die vollständige Hydrolyse und Kondensation ausreichende Menge Wasser sowie gegebenenfalls einen Hydrolyse- und Kondensationskatalysator aus der Liste HCl, $H_3PO_4$, $CH_3COOH$, $NH_3$, $NR'''_3$, wobei R''' für eine 1 bis 6 C-Atome enthaltende Alkylgruppe steht, in Reinsubstanz oder in wäßriger Lösung zusetzt, dann das Reaktionsgemisch unter Weiterrühren bei einer bestimmten Temperatur im Bereich von Raumtemperatur bis 200° C gelieren läßt, und bei Gelierbeginn oder bis zu einer Stunde danach mit 10 bis 2000, vorzugsweise 50 bis 500 Gew.-%, bezogen auf die Gesamtmenge an eingesetzten Silankomponenten, mit einem weitgehend nicht wassermischbaren, aber die (an)gelierte Reaktionsmischung lösenden und verdünnenden Lösungsmittel versetzt, homogenisiert und sofort oder in einem Zeitraum von bis zu 3 Stunden danach, gegebenenfalls unter Erhöhung der ursprünglich eingestellten Temperatur 10 bis 2000 Gew.-%, vorzugsweise 5 bis 500 Gew.-%, bezogen auf die Gesamtmenge an eingesetzen Silankomponenten, Wasser zugibt, die Siloxan enthaltende organische Phase in dem flüssigen Zweiphasensystem dispergiert und den sich nach Aushärtung der Tröpfchen in Form von Kugeln bildenden Feststoff nach ausreichender Reaktionszeit, bei Raumtemperatur bis 250° C, von der flüssigen Phase abtrennt, gegebenenfalls durch Extraktion reinigt, gegebenenfalls bei Raumtemperatur bis 250° C, gegebenenfalls unter Schutzgas oder im Vakuum trocknet und danach gegebenenfalls tempert und/oder klassiert.

**9.** Verfahren gemäß Anspruch 8,
**dadurch gekennzeichnet,**
daß als Lösungsmittel bei der Hydrolyse Methanol, Ethanol, n- oder i-Propanol, n- oder i-Butanol oder n-Pentanol allein oder in Mischung verwendet wird.

**10.** Verfahren nach einem der Ansprüche 8 oder 9,
**dadurch gekennzeichnet,**
daß der (an)gelierten Reaktionsmischung ein linearer oder verzweigter Alkohol mit 4 bis 12 C-Atomen, Toluol, Xylol-Isomere (einzeln oder im Gemisch) oder tert.-Butyl-methyl-ether zugesetzt wird.

**11.** Verfahren nach einem oder mehreren der Ansprüche 8 bis 10,
**dadurch gekennzeichnet,**
daß ein Teil oder auch die Gesamtmenge des bei oder nach Gelierbeginn zuzusetzenden wasserunlöslichen Lösungsmittels schon von Anfang an neben dem dort verwendeten Lösungsmittel eingesetzt wird.

**12.** Verfahren nach einem oder mehreren der Ansprüche 8 bis 11,
**dadurch gekennzeichnet,**
daß man eines oder mehrere der Silane gemäß Formel (VI) bis (VIII) nicht von Anfang an dem Ansatz zufügt, sondern erst später, bei oder kurz nach der Gelierung, gegebenenfalls in dem zuzusetzenden weitgehend wasserunlöslichen Lösungsmittel löst.

**13.** Verfahren nach einem oder mehreren der Ansprüche 8 bis 12,
**dadurch gekennzeichnet,**

daß man einige Silankomponenten kombiniert oder jeweils separat vorkondensiert und dann der Reaktionsmischung zusetzt.

**14.** Verfahren zur Nachbehandlung der nach einem oder mehreren der Ansprüche 8 bis 13 erhaltenen aber nicht getrockneten geformten Organopolysiloxan-Kondensate,
**dadurch gekennzeichnet,**
daß der erhaltene Feststoff in Anwesenheit mindestens der Komponente Wasser oder aber in der Mutterlauge in der flüssigen Phase einer Temperaturbehandlung während 1 Stunde bis zu einer Woche bei 50 bis 300° C, vorzugsweise 100 bis 200° C unterzogen wird, wobei der Überdruck der Summe der Partialdrücke der verwendeten Komponenten entspricht.

**15.** Verfahren gemäß Anspruch 14,
**dadurch gekennzeichnet,**
daß die Nachbehandlung in Gegenwart eines sauren oder basischen Katalysators, vorzugsweise in Gegenwart von Ammoniak, durchgeführt wird.

**16.** Verwendung der geformten Organopolysiloxan-Kondensate gemäß den Ansprüchen 1 bis 7 zur Adsorption von gasförmigen organischen Verbindungen, vorzugsweise zur Adsorption von Lösungsmitteldämpfen.

**17.** Verwendung der geformten Organopolysiloxan-Kondensate gemäß den Ansprüchen 1 bis 7 als Trägermaterial zur Präparation von heterogenen (Edelmetall)katalysatoren.

**18.** Verwendung der geformten Organopolysiloxan-Kondensate gemäß den Ansprüchen 1 bis 7 mit geeigneter Funktionalität, zur Absorption von Metallen aus wäßrigen oder organischen Lösungen.

## Claims

**1.** Shaped organosiloxane polycondensates, characterised in that they consist of units of the formula

$$X - R^1 \qquad (I)$$

and/or the formula

$$R^2 - Y - R^3 \qquad (II)$$

and the formula

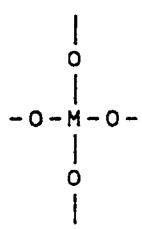

or

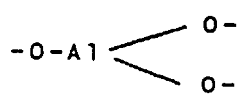

(III)

and optionally also units of the formula

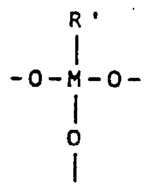 or 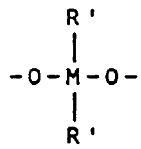 or 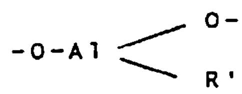 (IV)

in which the ratio

of (I) to (III) is in the range from 95 : 5 to 5 : 95 mol-%
or
of (II) to (III) or of the sum of (I) plus (II) to (III) is from 100 : 0 to 5 : 95 mol-%
and

in which the ratio of the sum of (I), (II) and (III) to (IV) is 100 : 0 to 50 : 50 mol-%, wherein $R^1$ to $R^3$ are identical or different and represent a group of the general formula

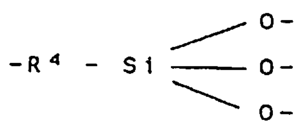 (V)

$R^4$ being bonded directly to the group X or Y and representing a linear or branched, fully saturated or unsaturated alkylene group with 1 to 10 carbon atoms, a cycloalkylene group with 5 to 8 carbon atoms, a phenylene group or a unit of the general formula

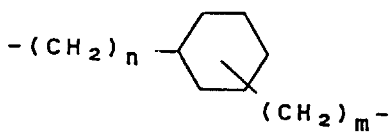 or 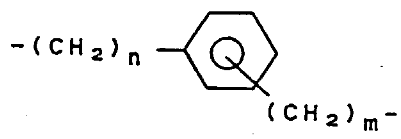

in which n is a number from 1 to 6 and gives the number of methylene groups adjacent to X or Y and m is a number from 0 to 6, wherein M is a Si, Ti or Zr atom and R' is a linear or branched alkyl group with 1 to 5 carbon atoms or a phenyl group and X in formula (I) represents
-H, -Cl, -Br, -I, -CN, -SCN, $-N_3$, -OR", -SH, -COOH, $-P(C_6H_5)_2$, $-NH_2$, $-N(CH_3)_2$, $-N(C_2H_5)_2$, $-NH-(CH_2)_2-NH_2$, $-NH-(CH_2)_2-NH-(CH_2)_2-NH_2$, $-NH-C(S)-NR_2$", $-NH-C(O)-NR_2$",
$-NR$"$-C(S)-NR_2$", $-O-C(O)-C(CH_3)=CH_2$, $-CH=CH_2$, $-CH_2-CH=CH_2$, $-CH_2-CH_2-CH=CH_2$,

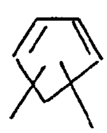

and Y in formula (II) represents
-S-, $-S_2-$, $-S_3-$,
$-S_4-$, >$P-(C_6H_5)$; -NH-C(S)-NH-, >$N-C(s)-NR''_2$,

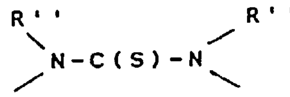 ,

-NH-C(O)-NH-, >N-C(O)-NR$''_2$

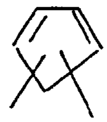

wherein R" is H or represents a linear or branched alkyl group with 1 to 5 carbon atoms, characterised by macroscopic spherical particles with a diameter of 0.01 to 2.5 mm, a specific surface area of 0.01 to 1000 $m^2/g$, a specific pore volume of 0.01 to 5.0 ml/g and a bulk density of 50 to 1000 g/l.

**2.** Shaped organosiloxane polycondensates according to Claim 1, characterised in that the ratio of (I) to (III) is in the range from 50 : 50 to 10 : 90 mol-% or

of (II) to (III) or of the sum of (I) plus (II) to (III) is 90 : 10 to 10 : 90 mol-%
and
the ratio of the sum of (I), (II), and (III) to (IV) is 100 : 0 to 50 : 50 mol-%.

**3.** Shaped organosiloxane polycondensates according to Claims 1 to 2, characterised in that the particles have a diameter of 0.05 to 1.5 mm.

**4.** Shaped organosiloxane polycondensates according to Claims 1 to 3, characterised in that they have a specific surface area of 50 to 800 $m^2/g$.

**5.** Shaped organosiloxane polycondensates according to Claims 1 to 4, characterised in that they have a bulk density of 100 to 800 g/l.

**6.** Shaped organosiloxane polycondensates according to Claims 1 to 5, characterised in that they are present as so-called random polycondensates, block polycondensates or mixed polycondensates.

**7.** Shaped organosiloxane polycondensates according to Claims 1 to 6, characterised in that the groups $R^1$ to $R^3$ represent a group of the general formula

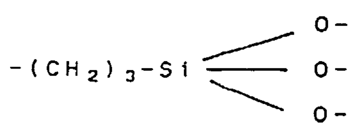

**8.** A process for the preparation of shaped random organosiloxane polycondensates according to Claim 1, characterised in that silane components of the general formulas (VI) to (VIII)

$$X\text{-}R^5 \quad (VI),$$

$$R^6\text{-}Y\text{-}R^7 \quad (VII),$$

$$M(OR^8)_{2-4}R'_{0-2} \text{ or } Al(OR^8)_{2-3}R'_{0-1} \quad (VIII)$$

corresponding to the stoichiometric composition of the polysiloxane being prepared specified in Claims 1 and 2, wherein $R^5$ to $R^7$ are identical or different and each represents a group of the general formula (IX)

$$-R^4-Si(OR^9)_3 \quad (IX)$$

X, Y, R', M and $R^4$ each being defined as in the formulae (I) to (V) and $R^8$ and $R^9$ representing a linear or branched alkyl group with 1 to 5 carbon atoms, are dissolved in a solvent which is largely water-miscible but dissolves the silane components, an amount of water which is at least sufficient for complete hydrolysis and condensation as well as optionally a hydrolysis and condensation catalyst from the list HCl, $H_3PO_4$, $CH_3COOH$, $NH_3$, $NR_3'''$, wherein R''' represents an alkyl group which contains 1 to 6 carbon atoms, as the pure substance or in aqueous solution, is added to the solution with stirring, then the reaction mixture is allowed to gel with further stirring at a specific temperature in the range from room temperature to 200°C, and at the start of gelling or up to one hour later 10 to 2000, preferably 50 to 500 wt.%, with reference to the total amount of silane components used, of a largely water-immiscible solvent, but one which dissolves and dilutes the gelled/gelling reaction mixture, is added, homogenised and immediately or within a time interval of up to 3 hours later, optionally while increasing the originally fixed temperature, 10 to 2000 wt.%, preferably 5 to 500 wt.%, with reference to the total amount of silane components used, of water is added, the siloxane-containing organic phase is dispersed in the liquid two-phase system and the solid which is formed after hardening of the droplets in the shape of spheres is separated from the liquid phase after a sufficient reaction time, at room temperature to 250°C, optionally purified by extraction, optionally dried at room temperature to 250°C, optionally under a protective gas or under vacuum, and then optionally annealed and/or classified.

**9.** A process according to Claim 8, characterised in that methanol, ethanol, n- or i-propanol, n- or i- butanol or n-pentanol, alone or as a mixture, is used as solvent for hydrolysis.

**10.** A process according to one of Claims 8 or 9,
characterised in that a linear or branched alcohol with 4 to 12 carbon atoms, toluene, xylene isomers separately or as a mixture) or tert.-butyl-methylether is added to the gelled/gelling reaction mixture.

**11.** A process according to one or more of Claims 8 to 10, characterised in that some of or the entire amount of water-insoluble solvent being added at or after the start of gelling is used from the beginning of the process in addition to the solvent used at that point.

**12.** A process according to one or more of Claims 8 to 11, characterised in that one or more of the silanes of the formulas (VI) to (VIII) is not introduced from the beginning, but is introduced only later, during or shortly after gelling, optionally in the largely water-insoluble solvent being added.

**13.** A process according to one or more of Claims 8 to 12, characterised in that some silane components, combined or each separately, are pre-condensed and then added to the reaction mixture.

**14.** A process for after-treating the shaped but not dried organopolysiloxane condensates obtained in accordance with one or more of Claims 8 to 13, characterised in that the solid obtained is subjected to a thermal treatment for 1 hour to one week at 50 to 300°C, preferably 100 to 200°C, in the liquid phase in the presence of at least the component water or else in the mother liquor, wherein the excess pressure corresponds to the sum of the partial pressures of the components used.

**15.** A process according to Claim 14, characterised in that the after-treatment is performed in the presence of an acid or basic catalyst, preferably in the presence of ammonia.

**16.** Use of the shaped organopolysiloxane condensates in accordance with Claims 1 to 7 for adsorbing gaseous organic compounds, preferably for adsorbing solvent vapours.

**17.** Use of the shaped organopolysiloxane condensates in accordance with Claims 1 to 7 as support materials for the

preparation of heterogeneous (noble metal) catalysts.

**18.** Use of the shaped organopolysiloxane condensates in accordance with Claims 1 to 7, with appropriate functional groups, for absorbing metals from aqueous or organic solvents.

## Revendications

**1.** Polycondensats d'organosiloxanes façonnés, caractérisés en ce qu' ils sont constitués d'unités de formule :

$$X - R^1 \qquad (I)$$

et/ou de formule

$$R^2 - Y - R^3 \qquad (II)$$

et de formule

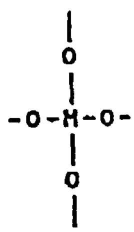 ou 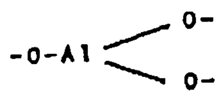 (III)

ainsi que le cas échéant en supplément d'éléments de formule :

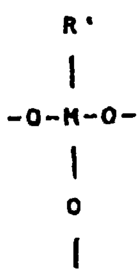 ou 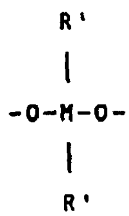 ou 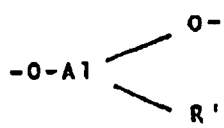 (IV)

dans des rapport de :

(I) à (II) dans la zone de 95 à 5 jusqu'à 5 à 95 % mole ou (II) à (III) ou la somme de (I) plus (II) à (III), de 100 à 0 jusqu'a 5 à 95 % mol,
et dans le rapport des sommes de (I), (II) et (III) à (IV) de 100 à 0 jusqu'à 50 à 50 % mol,

dans lesquelles $R^1$ à $R^3$ sont identiques ou différents et signifient un groupe de formule générale :

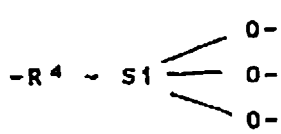 (V)

$R^4$ est relié directement au radical X ou Y et représente un groupe alkylène linéaire ou ramifié, complètement sature ou non saturé ayant de 1 à 10 atomes de carbone, un groupe cycloalcoylène ayant de 5 à 8 atomes de carbone, un groupe phénylène ou un élément de formule générale :

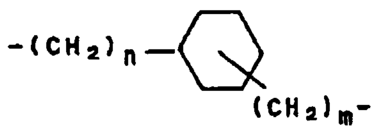

ou

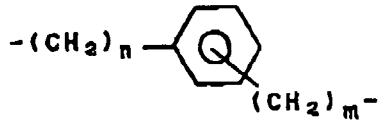

dans lequel n est un nombre allant de 1 à 6 et le nombre X ou des groupes méthylène contenant Y et M est un nombre allant de 0 à 6, dans lequel M est un atome de Si, de Ti ou de Zr et R' est un groupe alkyle linéaire ou ramifié ayant de 1 à 5 atome de carbone, ou un groupe phényle et X dans la formule (I) représente :
-H, -Cl, -Br, -J, -CN, -SCN, $-N_3$, -OR", -SH, -COOH, $-P(C_6H_5)_2$, $-NH_2$, $-N(CH_3)_2$,$-N(C_2H_5)_2$,$-NH-(CH_2)_2-NH_2$, $-NH-(CH_2)_2-NH-(CH_2)_2-NH_2$, NH-C(S)-$NR_2$", -NH-C(O)-$NR_2$", -NR"-C(S)-$NR_2$", -O-C(O)-C-$(CH_3)=CH_2$, $-CH=CH_2$, $-CH_2CH=CH_2$, $-CH_2-CH_2CH=CH_2$,

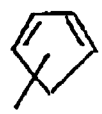

et Y dans la formule (II) représente : -S-, $-S_2$-,$-S_3$-, $-S_4$-, >P-$(C_6H_5)$, -NH-C(S)-NH-, >N-C(S)-$NR_2''$,

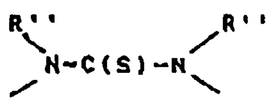,

-NH-C(O)-NH-, >-N-C(O)-$NR_2''$,

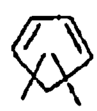

dans lesquels R" est identique à H ou un groupe alkyle linéaire ou ramifié ayant de 1 à 5 atomes de carbone, caractérisé par
des particules sphéroïdes macroscopiquement, ayant un diamètre allant de 0,01 à 2,5 mm, une surface spécifique allant de 0,01 à 1000 $m^2/g$, un volume de pores spécifique allant de 0,01 à 5,0 ml/g ainsi que par une densité apparente de 50 à 1000 g/l.

**2.** Polycondensats d'organosiloxanes façonnés, selon la revendication 1,
caractérisés en ce que
les rapports de (I) à (III) se situent dans la zone de 50 à 50 à 10 jusqu'à 90 % mol, ou de (II) à (III) ou la somme de (I) plus (II) à (III) de 90 à 10 jusqu'à 10 à 90 % mol, et dans le rapport de la somme de (I), (II) et (III) à IV se situent de 100 à 0 jusqu'à 50 à 50 % mol.

**3.** Polycondensats d'organosiloxanes façonnés selon les revendications 1 à 2,
caractérisés en ce que
les particules ont un diamètre allant de 0,05 à 1,5 mm.

**4.** Polycondensats d'organosiloxanes façonnés selon les revendications 1 à 3,
caractérisés en ce qu'
ils ont une surface spécifique allant de 50 à 800 $m^2/g$.

**5.** Polycondensats d'organosiloxanes façonnés conformément aux revendications 1 à 4, caractérisés en ce qu' ils ont une densité apparente allant de 100 à 800 g/l.

**6.** Polycondensats d'organosiloxanes façonnés conformément aux revendications 1 à 5 caractérisés en ce qu' ils se présentent sous la forme de ce que l'on appelle des polycondensats statistiques, des polycondensats en blocs, ou des polycondensats mixtes.

**7.** Polycondensats d'organosiloxanes façonnés conformément aux revendications 1 à 6 caractérisés en ce que les radicaux $R^1$ à $R^3$ représentent un groupe de formule générale :

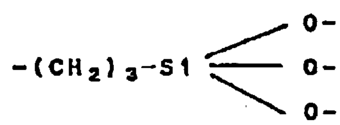

**8.** Procédé de fabrication de polycondensats d'organosiloxanes façonnés statistiques conformément à la revendication 1, caractérisé en ce que les composants silane de formules générales (VI) à (VIII)

$$X\text{-}R^5 \qquad \text{(VI)},$$

$$R^6\text{-}Y\text{-}R^7 \qquad \text{(VII)},$$

$$M(OR^8)_{2\text{-}4}R^1{}_{0\text{-}2} \text{ ou } Al(OR^8)_{2\text{-}3}R^1{}_{0\text{-}1} \qquad \text{(VIII)}$$

qui correspondent à la composition stoechiométrique établie dans les revendications 1 et 2, du polysiloxane qui doit être préparé, dans lesquelles $R^5$ à $R^7$ sont identiques ou différents et signifient respectivement un groupe de formule générale (IX),

$$-R^4\text{-}Si(OR^9)_3 \qquad \text{(IX)}$$

X, Y, $R^1$, M et $R^4$ respectivement possèdent la même signification que dans les formules (I) à (v) et $R^8$ et $R^9$ représentent un radical alkyle linéaire ou ramifié, ayant de 1 à 5 atomes de carbone, sont dissous dans un solvant largement miscible à l'eau, mais qui dissout les composants silane, ajoute à la solution sous agitation une quantité d'eau au moins suffisante pour l'hydrolyse complète et la condensation, ainsi que le cas échéant un catalyseur d'hydrolyse et un catalyseur de condensation choisi dans la liste de ClH, $PO_4H_3$, $CH_3COOH$, $NH_3$, $NR_3'''$ dans laquelle R''' représente un radical alkyle contenant de 1 à 6 atomes de carbone, sous forme de substance pure ou en solution aqueuse, puis laisse gélifier le mélange réactionnel tout en poursuivant l'agitation à une température déterminée dans la zone allant de la température ambiante à 200°C, et lors du début de gélification ou jusqp'à une heure après, mélange avec 10 à 2000, de préférence de 50 à 50 % en poids rapporté à la quantité totale de composants silane mis en oeuvre, à un solvant largement non miscible à l'eau, mais qui dissout et dilue le mélange réactionnel gélifié, homogénéise et immédiatement ou en l'espace de jusqu'à 3 heures après, le cas échéant en élevant la température réglée originellement verse de 10 à 2000 % en poids, de préférence de 5 à 500 % en poids rapporté à la quantité totale de composants silane mis en oeuvre, d'eau, met en dispersion la phase organique contenant le siloxane dans le système à deux phases liquide et sépare la matière solide qui se forme après durcissement des gouttelettes, sous la forme de billes après un temps de réaction suffisant à une

température allant de la température ambiante à 250°C, de la phase liquide, le cas échéant purifie par extraction, le cas échéant sèche sous gaz protecteur ou dans le vide et ensuite recuit et/ou classe.

**9.** Procédé selon la revendication 8,
caractérisé en ce que
comme solvant pour l'hydrolyse on utilise le méthanol, l'éthanol, le n- ou le i- propanol le n- ou le i-butanol ou le n-pentanol seul ou en mélange.

**10.** Procédé selon l'une des revendications 8 ou 9,
caractérisé en ce qu'
au mélange réactionnel gélifié on ajoute un alcool linéaire ou ramifié ayant de 4 à 12 atomes de carbone, du toluène, des isomères de xylène (isolément ou en mélange) ou de l'éther terbutylméthyiique.

**11.** Procédé selon l'une ou plusieurs des revendications 8 à 10,
caractérisé en ce qu'
une partie ou aussi la quantité globale du solvant qui doit être ajouté lors de ou après le début de la gélification insoluble dans l'eau, est mis en oeuvre déjà dès le début à côté du solvant utilisé là.

**12.** Procédé selon l'une ou plusieurs des revendications 8 à 11,
caractérisé en ce que
l'on ajoute un ou plusieurs des silanes conformément à la formule (VI) à (VIII) non pas dès le début, à l'échantillon mais plus tard, lors ou peu après la gélification, et dissout le cas échéant dans le solvant largement insoluble dans l'eau à ajouter.

**13.** Procédé selon l'une ou plusieurs des revendications 8 à 12,
caractérisé en ce qu'
on combine quelques composants silane on les précondense respectivement séparément et ensuite les ajoute au mélange réactionnel.

**14.** Procédé de post-traitement des condensats d'organopolysiloxanes façonnés, obtenus selon l'une ou plusieurs des revendications 8 à 13 mais non séchés,
caractérisé en ce que
la matière solide obtenue est soumise, en présence au moins du composant eau, ou cependant dans la liqueur mère, dans la phase liquide à un traitement thermique pendant une heure à une semaine, de 50 à 300°C, de préférence de 100 à 200°C, dans lequel la surpression correspond à la somme des pressions partielles des composants utilisés.

**15.** Procédé conformément à la revendication 14,
caractérisé en ce que
le post-traitement est effectué en présence d'un catalyseur acide ou basique, de préférence en présence d'ammoniaque.

**16.** Utilisation des condensats d'organopolysiloxanes façonnés conformément aux revendications 1 à 7, en vue de l'adsorption de composés organiques gazeux, de préférence pour l'adsorption de vapeurs de solvants.

**17.** Utilisation des condensats d'organopolysiloxanes façonnés conformément aux revendications 1 à 7, comme matériau support en vue de la préparation de catalyseurs (en métal noble) hétérogènes.

**18.** Utilisation des condensats d'organopoilysiloxanes façonnés conformément aux revendications 1 à 7, avec fonctionnalité appropriée, en vue de l'adsorption de métaux à partir de solutions aqueuses ou organiques.